# EUROPÄISCHE PATENTSCHRIFT

(11) **EP 2 199 189 B1**
(45) Veröffentlichungstag und Bekanntmachung des Hinweises auf die Patenterteilung: **17.10.2012**
(21) Anmeldenummer: 09015036.8
(22) Anmeldetag: 04.12.2009
(51) Int. Cl.: B62D 35/00, B62D 37/02

(54) **Frontspoilervorrichtung für ein Kraftfahrzeug sowie Kraftfahrzeug mit einer Frontspoilervorrichtung**
Front spoiler device for a motor vehicle and motor vehicle with a front spoiler device
Dispositif de jupe de pare-choc pour un véhicule automobile, ainsi que véhicule automobile doté d'un dispositif de jupe de pare-choc

(30) Priorität: 11.12.2008 DE 102008061793
(43) Veröffentlichungstag der Anmeldung: 23.06.2010
(73) Patentinhaber: Bayerische Motoren Werke Aktiengesellschaft, 80809 München (DE)
(72) Erfinder: Schatz, Manfred, 85375 Neufahrn (DE); Schindler, Arne, 80995 München (DE); Herter, Frank, 81543 München (DE)

(56) Entgegenhaltungen:
- EP-A1- 1 040 985
- DE-A1- 2 549 493
- DE-A1-102005 048 924
- DE-C1- 3 613 303
- US-A- 4 976 489
- US-A- 5 458 391

## Beschreibung

Die Erfindung betrifft ein Kraftfahrzeug mit einer Frontspoilervorrichtung.

Aus der DE PS 26 16 948 ist ein geschwindigkeitsabhängiger Spoiler bekannt, der einen fest am Fahrzeug angebrachten Teil sowie einen relativ zu dem am Fahrzeug fest angebrachten Teil absenkbares Luftleitblech enthält, das zwischen zwei Endstellungen in Abhängigkeit von der durch die Fahrzeuggeschwindigkeit hervorgerufenen Luftströmung entgegen der Wirkung mindestens einer Feder bewegbar ist. Die Feder bewegt das bewegliche Luftleitblech in Richtung seiner oberen Endlage und die aus der Luftströmung resultierende Kraft bewegt das Luftleitblech in Richtung seiner unteren Endlage, so dass das Luftleitblech bei geringer Fahrgeschwindigkeit an einem Anschlag und bei hoher Fahrgeschwindigkeit an einem unteren Anschlag anliegt.

Eine Eigenart des Spoilers gemäß der genannten Druckschrift liegt darin, dass das fahrzeugfeste Teil beispielsweise von der Unterseite eines Fahrzeugkühlers nach unten vorsteht, so dass es beschädigt werden kann, wenn das Fahrzeug von einem Bürgersteig rückwärts auf eine tiefer gelegene Strasse fährt und dabei einfedert, wenn die Vorderräder den Randstein überfahren haben.

Die DE 25 49 493 A1 betrifft ein Fahrzeug gemäß dem Oberbegriff des Anspruchs 1.

Die DE 10 2005 048 924 A1, US 4,976,489 A und DE 36 13 301 C1 betreffen weitere Spoilervorrichtungen.

Der Erfindung liegt die Aufgabe zugrunde, ein Kraftfahrzeug mit einer verbesserten Frontspoilervorrichtung zu schaffen.

Diese Aufgabe wird mit einem Kraftfahrzeug mit einer Frontspoilervorrichtung gemäß dem Anspruch 1 gelöst.

Bei dem Kraftfahrzeug gemäß Anspruch 1 wird ein Zwischenraum zwischen der Unterseite eines Kühlers eines Kraftfahrzeugs und einem an der Fahrzeugkarosserie befestigten Hauptspoiler mittels eines geschwindigkeitsabhängigen Hilfsspoiler abgedichtet, ohne dass die Gefahr einer Beschädigung bei einer Rückwärtsabfahrt von einem Bürgersteig besteht.

Die Unteransprüche 2 bis 8 sind auf vorteilhafte Ausführungsformen und Weiterbildungen des erfindungsgemäßen Kraftfahrzeugs gerichtet.

Die Erfindung wird im Folgenden beispielsweise und mit weiteren Einzelheiten anhand von Figuren erläutert, in denen darstellen
Fig. 1 eine schematische Seitenansicht einer erfindungsgemäßen Frontspoilervorrichtung mit in Ruhestellung befindlichem Spoiler,
Fig. 2 die Spoilervorrichtung gemäß Fig. 1, eingebaut in ein Fahrzeug,
Fig. 3 die Anordnung gemäß Fig. 2 bei zunehmender Fahrzeuggeschwindigkeit,
Fig. 4 die Anordnung gemäß Fig. 2 bei in maximaler Wirkstellung befindlichem Spoiler,
Fig. 5 die Anordnung gemäß Fig. 2 bei in Flachstellung befindlichem Spoiler, und
Fig. 6 eine Skizze zur Erläuterung der Anordnung der Frontspoilervorrichtung am Fahrzeug.

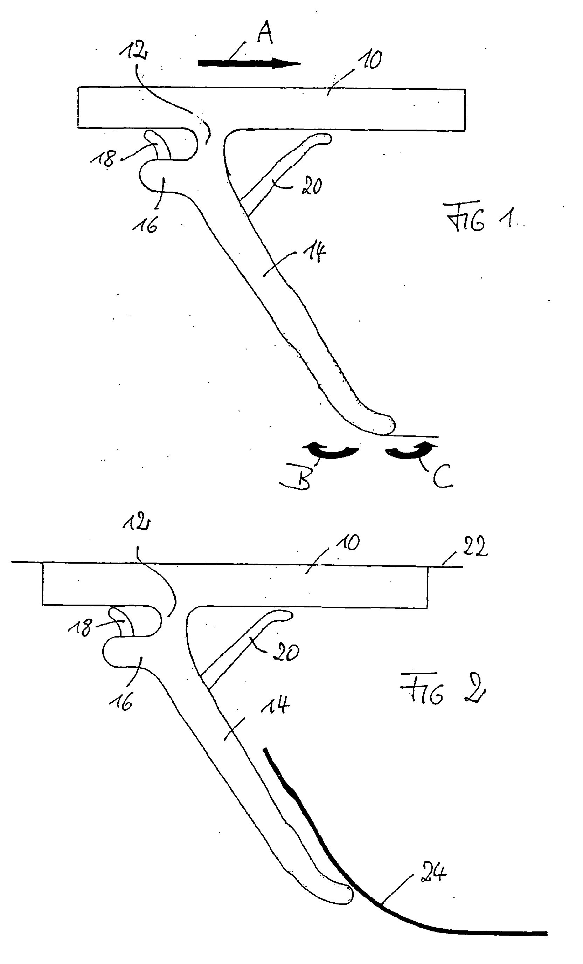

Gemäß Fig. 1 enthält eine an einem Kraftfahrzeug anbringbare Frontspoilervorrichtung ein Tragteil 10, das beispielsweise als ein flaches Bauteil ausgebildet ist, das an der Unterseite eines Kraftfahrzeugkühlers befestigbar ist. Die Vorwärtsrichtung eines Kraftfahrzeugs, an dem das Tragteil 10 befestigbar ist, ist durch einen Pfeil A verdeutlicht. Mit dem Tragteil 10 einteilig und über einen als Filmscharnier 12 wirksamen Bereich verbunden ist ein Spoiler 14, der in der in Figur 1 dargestellten Ruhestellung von dem Tragteil 10 schräg nach unten und vorne absteht. Der Spoiler 14 ist in an sich bekannter Weise insgesamt schaufelförmig als ein Luftleitteil ausgebildet. Das Filmscharnier 12 erstreckt sich über die gesamte Breite des nicht dargestellten Kühlers, so dass gemäß Fig. 1 von rechts her anströmende Luft durch den Spoiler 14 nach oben in Richtung auf den Kühler geleitet wird, um dessen Wirksamkeit zu vergrößern.

Unmittelbar unterhalb des Filmscharniers 12 ist der Spoiler 14 mit einem nasenartigen Ansatz 16 ausgebildet, von dem ein erstes Federelement 18 nach oben vorsteht und in der dargestellten Ruhestellung des Spoilers 14 an der Unterseite des Tragteils 10 anliegt.

Von der gemäß Fig. 1 rechten Vorderseite des Spoilers 14 steht ein armartig ausgebildetes zweites Federelement 20 schräg nach oben und liegt in der dargestellten Ruhestellung des Spoilers 14 an der Unterseite des Tragteils 10 an.

Das Tragteil 10 wird von den beiden Federelementen 18, 20 in seine dargestellte Ruhestellung vorgespannt, aus der es gemäß Fig. 1 gegen die Kraft eines der jeweiligen Federelemente in Uhrzeigerrichtung (Pfeil B) und in Gegenuhrzeigerrichtung (Pfeil C) verschwenkt werden kann.

Fig. 2 zeigt die Baugruppe gemäß Fig. 1 angebaut an ein Fahrzeug, wobei die Linie 22 die Höhe der Unterkante eines Fahrzeugkühlers angibt. Die dick ausgezogene Linie stellt im Schnitt einen Hauptspoiler 24 dar, der ein aus weichem Kunststoff bestehendes Formteil bildet, das beispielsweise im Bereich seiner vorderen seitlichen Ränder starr mit der Fahrzeugkarosserie verbunden ist und in seinem hinteren Bereich an der Vorderseite des Spoilers 14 anliegt. Im dargestellten Beispiel bildet der Spoiler 14 einen Hilfsspoiler bzw. eine Dichtlippe, die einen Zwischenraum zwischen dem Hauptspoiler 24 und der Unterseite des nicht dargestellten Fahrzeugskühlers bezüglich des gemäß Fig. 2 von rechts kommenden Fahrtwindes abdichtet, so dass der gesamte Fahrtwind nach oben durch den Kühler hindurch geleitet wird. Die Form des Spoilers 14 ist derart, dass eine sichere Anlage des Hauptspoilers 24 an dem Spoiler 14 gewährleistet ist, auch wenn sich der Hauptspoiler 24 infolge der Kraft des Fahrtwindes bei höheren Geschwindigkeiten verformt und der in sich steife Spoiler 14 um das Filmscharnier 12 verschwenkt, wie im Folgenden erläutert wird.

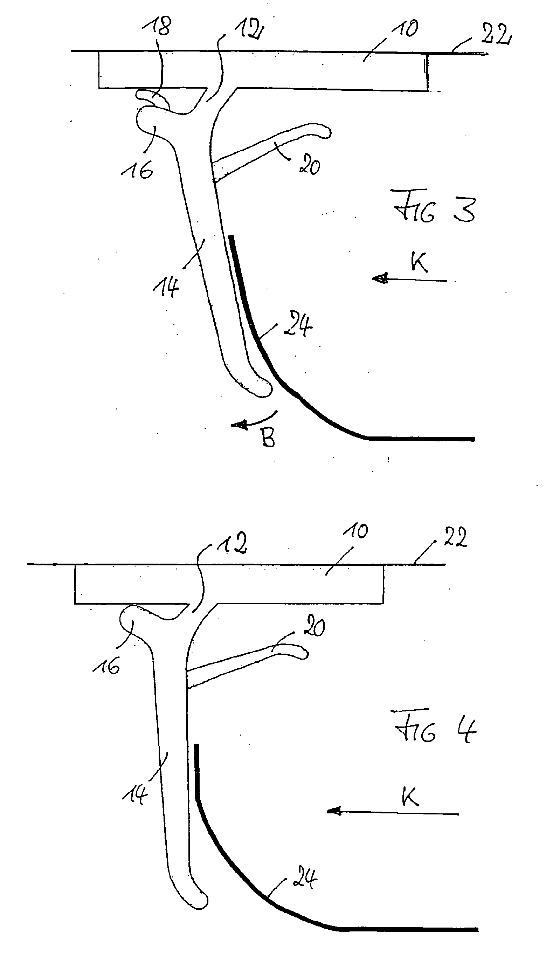

Fig. 3 zeigt die Anordnung gemäß Fig. 2 bei von rechts her in Folge zunehmender Fahrzeuggeschwindigkeit wirkender Luftkraft K. Infolge der Luftkraft K wird der bezüglich der Fahrzeugvorwärtsrichtung A (Fig. 1) hintere Bereich des Hauptspoilers 24 in Rückwärtsrichtung des Fahrzeugs verformt, wobei der Spoiler 14 unter Wirkung der Kraft K in Uhrzeigerrichtung (Pfeil B) verschwenkt wird. Dabei gleitet der Randbereich des Hauptspoilers 24 längs des Spoilers 14 und wird das erste Federelement 18 zunehmend verformt.

Fig. 4 zeigt den maximal verschwenkten Zustand des Spoilers 14 der bei hoher Windkraft, das heisst hoher Fahrzeuggeschwindigkeit erreicht wird. Der Spoiler 14 ist in gegen Uhrzeigerrichtung maximal, das heisst in seine maximale Wirkstellung verschwenkt, wobei die Verschwenkung dadurch begrenzt ist, dass der Ansatz 16 in Anlage an das Tragteil 10 kommt und auf diese Weise einen Anschlag bildet.

Bei abnehmender Fahrzeuggeschwindigkeit kehrt der Spoiler 14 unter Wirkung des zweiten Federelements 18 selbsttätig in seine Ruhestellung gemäß Fig. 2 zurück.

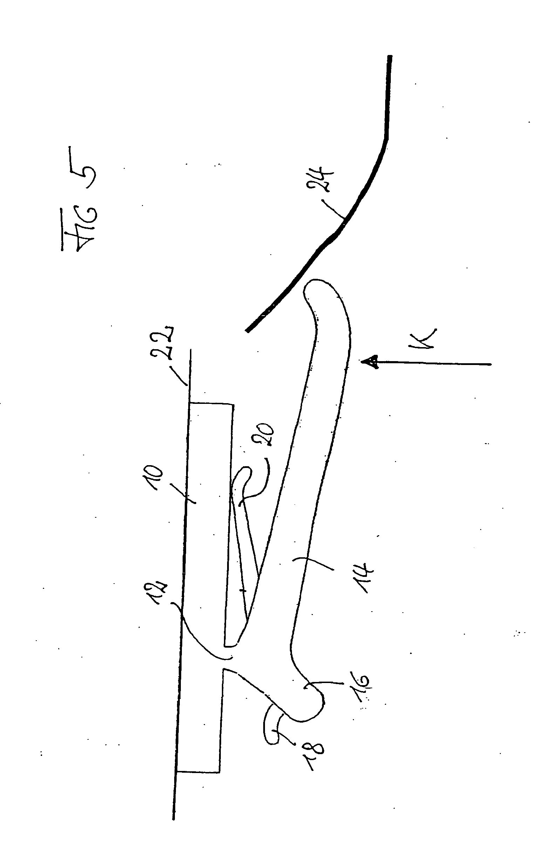

Fig. 5 zeigt einen Zustand, bei dem der Spoiler 14 gegen die Kraft des zweiten Federelements 20 in Gegenuhrzeigerrichtung (Pfeil C) in Fig. 1 verschwenkt ist, wobei der Spoiler 14 den Hauptspoiler 24 aufwärts in Richtung der Unterseite 22 des Kühlers mitnimmt, so dass unterhalb des Kühlers nur ein minimaler Bauraum beansprucht wird. Der Zustand gemäß Fig. 5 tritt beispielsweise ein, wenn das Fahrzeug rückwärts (entgegen der Richtung des Pfeils A der Fig. 1) von einem erhöhten Niveau über einen Bordstein auf ein niedrigeres Straßenniveau fährt und das Fahrzeug einfedert, wenn die Vorderräder den Bordstein überfahren und auf das Straßenniveau gelangen. Dabei kann der Spoiler 14 auf den Bordstein treffen und durch eine vom Bordstein her wirkende Kraft K in gegen Uhrzeigerrichtung verschwenkt werden, so dass keine Beschädigungen entstehen. Das System kehrt aus der Stellung gemäß Fig. 5 in die Ruhestellung gemäß Fig. 2 zurück, sobald das Fahrzeug ausfedert beziehungsweise unterhalb des Kühlers genügend Platz vorhanden ist.

Die Funktion des Spoilers 14 wurde vorstehend in seinem Zusammenwirken mit dem Hauptspoiler 24 beschrieben. In diesem Fall ist das Niveau des unteren Endes des Spoilers 14 beispielsweise etwa 15 mm unterhalb der Unterseite des Kühlers 22, so dass der Spoiler 14 im Wesentlichen die Funktion einer Dichtlippe hat, die zwischen der Unterseite des Kühlers und dem Hauptspoiler 24 dichtet.

Der Hauptspoiler 24 kann in einer abgeänderten Ausführungsform fehlen. Der Spoiler 14 ist dann entsprechend größer ausgebildet und derart angeordnet, dass er selbst den Fahrtwind durch den Kühler leitet.

Die beschriebene Baugruppe kann vielfältig abgeändert werden. Im dargestellten Beispiel sind das Tragteil 10, der Spoiler 14, der Ansatz 16 und die Federelemente 18, 20 integral miteinander als Kunststoffformteil ausgebildet. Der Spoiler 14 kann am Tragteil 10 alternativ mittels eines als gesondertes Bauteil ausgebildeten Scharniergelenks befestigt sein. Die Federelemente 18, 20 können ebenfalls gesonderte Bauteile bilden, die am Spoiler 14 befestigt sind. Bei Ausbildung des Scharniers zwischen dem Tragteil 10 und dem Spoiler 14 als gesondertes Gelenk können in dieses Scharniergelenk eine oder mehrere Torsionsfedern eingebaut sein, die die blattfederartig wirkenden Federelemente ersetzten.

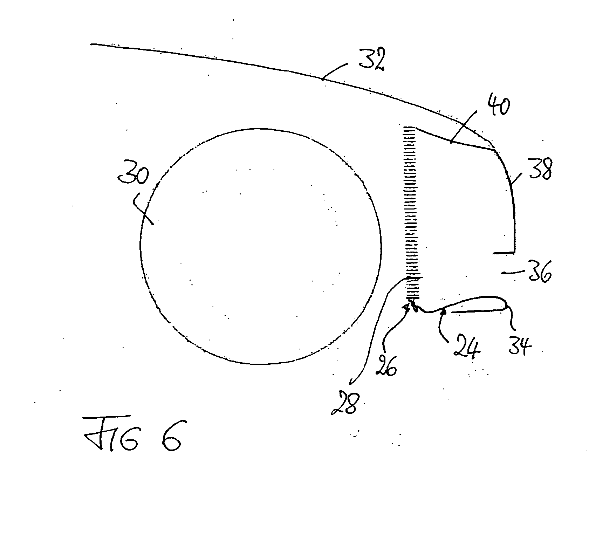

Figur 6 zeigt die Anordnung der erfindungsgemäßen Frontspoilervorrichtung am Fahrzeug. Gemäß Figur 6 ist das Tragteil 10 der insgesamt mit 26 bezeichneten Frontspoilervorrichtung an der Unterseite eines Kühlers 28 befestigt. Ein Vorderrad des Fahrzeugs ist mit 30 bezeichnet, eine Motorhaube mit 32.

Der Hauptspoiler 24, der an einem Karosserie- oder Aufbauteil des Fahrzeugs befestigt ist, weist eine Unterwand auf, die unter Bildung eines Unterrandes 34 eines Lufteinlasses 36 um annähernd 180° entgegen der Fahrtrichtung des Fahrzeugs umgebogen ist und, wie in den Figuren 2 bis 5 dargestellt, am Spoiler 14 anliegt. Für den Hauptspoiler 24 sind zahlreiche Ausführungsformen denkbar, beispielsweise kann der Hauptspoiler 24 von einer Frontschürze ausgehen und einteilig mit dieser ausgebildet sein, wobei der Hauptspoiler 24 nicht selbst den Unterrand 34 bilden muss, sondern lediglich den hinteren Teil der unteren, im Wesentlichen dichten Begrenzung des Einlasses 36 bildet, durch den Luft zum Kühler strömt. Der Hauptspoiler 24 kann auch mittels eines ihn in Anlage an den Spoiler 14 vorspannenden Scharniers am Fahrzeug befestigt sein.

Der Oberrand des Einlasses 36 ist durch ein Frontteil 38 gebildet, von dem aus eine Oberwand 40 ausgeht, die den Raum vor dem Kühler 28 nach oben abdichtet, so dass die gesamte, durch den Einlass 36 einströmende Luft durch den Kühler 28 hindurchströmen muss.

### Bezugszeichenliste

- 10: Tragteil
- 12: Filmscharnier
- 14: Spoiler
- 16: Ansatz
- 18: erstes Federelement
- 20: zweites Federelement
- 22: Unterseite Kühler
- 24: Hauptspoiler
- 26: Frontspoilervorrichtung
- 28: Kühler
- 30: Vorderrad
- 32: Motorhaube
- 34: Unterrand
- 36: Einlass
- 38: Frontteil
- 40: Oberwand

## Patentansprüche

1. Kraftfahrzeug mit einer Frontspoilervorrichtung enthaltend
einen Spoiler (14), der vom Fahrtwind mit zunehmender Fahrzeuggeschwindigkeit aus einer Ruhestellung in eine maximale Wirkstellung um eine in Querrichtung des Fahrzeugs verlaufende Achse schwenkbar ist, und
eine Federeinrichtung (18, 20), die den Spoiler (14) elastisch in seine Ruhestellung vorspannt, wobei
der Spoiler (14) in seiner Ruhestellung eine Luftleitfläche bildet, die bezogen auf die Fahrzeuglängsrichtung schräg nach vorne unten gerichtet ist, in seiner maximalen Wirkstellung einen größeren Winkel mit der Fahrzeuglängsrichtung bildet als in der Ruhestellung, und in eine zur Richtung der Verschwenkung in seine maximale Wirkstellung entgegengesetzte Richtung in eine Flachstellung verschwenkbar ist,
**dadurch gekennzeichnet, dass** der Spoiler (14) einen Hilfsspoiler bildet, der einen Zwischenraum zwischen der Unterseite eines Kühlers des Kraftfahrzeugs und einem an der Fahrzeugkarosserie befestigten Hauptspoiler (24) aus nachgiebigem Material abdichtet.

2. Kraftfahrzeug nach Anspruch 1, **dadurch gekennzeichnet, dass** der Hilfsspoiler (14) als eine Lippe ausgebildet ist, die an der Rückseite des sich mit zunehmender Fahrzeuggeschwindigkeit verformenden Hauptspoilers (24) anliegt.

3. Kraftfahrzeug nach Anspruch 1 oder 2, **dadurch gekennzeichnet, dass** der Spoiler (14) schwenkbar mit einem an der Unterseite eines Kühlers des Kraftfahrzeugs starr befestigbaren Tragteil (10) verbunden ist.

4. Kraftfahrzeug nach Anspruch 3, **dadurch gekennzeichnet, dass** der Spoiler (14) mit dem Tragteil (10) mittels eines Filmscharniers (12) verbunden ist.

5. Kraftfahrzeug nach Anspruch 4, **dadurch gekennzeichnet, dass** das Tragteil (10) und der Spoiler (14) integral ausgebildet sind.

6. Kraftfahrzeug nach einem der Ansprüche 1 bis 5, **dadurch gekennzeichnet, dass** die Verschwenkbarkeit des Spoilers (14) in dessen maximale Wirkstellung durch einen Anschlag (16) begrenzt ist.

7. Kraftfahrzeug nach Anspruch 6, **dadurch gekennzeichnet, dass** die Federeinrichtung ein erstes Federelement (18), gegen dessen Kraft der Spoiler (14) in seine maximale Wirkstellung verschwenkbar ist, und ein zweites Federelement (20) aufweist, gegen dessen Kraft der Spoiler (14) in seine Flachstellung verschwenkbar ist.

8. Kraftfahrzeug nach Anspruch 7, **dadurch gekennzeichnet, dass** der Spoiler (14), die Federelemente (18, 20) und der Anschlag (16) integral ausgebildet sind.

## Claims

1. A motor vehicle with a front spoiler device containing
a spoiler (14) which, at increasing speed, is pivotable by the head wind from an inoperative position into a maximum operative position around an axis extending in the transverse direction of the vehicle, and
a spring device (18, 20) which elastically biases the spoiler (14) into its inoperative position, wherein
the spoiler (14) in its inoperative position forms an air baffle plate which, relative to the longitudinal direction of the vehicle, is directed at an angle forwards and downwards, is at a greater angle to the longitudinal direction of the vehicle in its maximum operative position than in the inoperative position and is pivotable into a flat position into a direction opposite to the direction in which it is pivoted into its maximum operative position,
**characterised in that** the spoiler (14) is in the form of an auxiliary spoiler which seals off a space between the underside of a radiator of the vehicle and a main spoiler (24) of flexible material fastened to the vehicle body.

2. A vehicle according to claim 1, **characterised in that** the auxiliary spoiler (14) is in the form of a lip which abuts the back of the main spoiler (24), which changes shape as the speed increases.

3. A vehicle according to claim 1 or claim 2, **characterised in that** the spoiler (14) is pivotably connected to a bearing part (10) rigidly fastened to the underside of a vehicle radiator.

4. A vehicle according to claim 3, **characterised in that** the spoiler (14) is connected to the bearing part (10) by a film hinge (12).

5. A vehicle according to claim 4, **characterised in that** the bearing part (10) and the spoiler (14) are built-in parts.

6. A vehicle according to any of claims 1 to 5, **characterised in that** the pivotability of the spoiler (14) into its maximum operative position is limited by a stop (16).

7. A vehicle according to claim 6, **characterised in that** the spring device comprises a first spring element (18) against which the spoiler (14) is pivotable into its maximum operative position, and a second spring element (20) against which the spoiler (14) is pivoted into its flat position.

8. A vehicle according to claim 7, **characterised in that** the spoiler (14), the spring elements (18, 20) and the stop (16) are built-in parts.

## Revendications

1. Véhicule automobile équipé d'un dispositif de jupe avant comportant :
- une jupe (14) qui est basculée par le vent de circulation en fonction croissante de la vitesse du véhicule à partir d'une position de repos dans une position active maximale autour d'un axe dans la direction transversale du véhicule, et
- une installation de ressort (18, 20) qui précontraint la jupe (14) élastiquement dans sa position de repos,
dans lequel
en position de repos, la jupe (14) forme une surface de guidage d'air dirigée en biais vers l'avant et le bas par rapport à la direction longitudinale du véhicule et qui, dans sa position active maximale, fait avec la direction longitudinale du véhicule, un angle plus grand qu'en position de repos et peut basculer dans une position à plat, dans la direction opposée à la direction de basculement dans sa position active maximale,
véhicule **caractérisé en ce que**
la jupe (14) constitue une jupe auxiliaire fermant de manière étanche l'intervalle entre le côté inférieur du radiateur du véhicule et la jupe principale (24) fixée à la carrosserie du véhicule et qui est en un matériau souple.

2. Véhicule automobile selon la revendication 1,
**caractérisé en ce que**
la jupe auxiliaire (14) est réalisée sous la forme d'une lèvre qui s'applique contre le côté arrière de la jupe principale (24) se déformant en fonction de l'augmentation de la vitesse du véhicule.

3. Véhicule automobile selon la revendication 1 ou 2,
**caractérisé en ce que**
la jupe (14) est reliée de manière pivotante à une pièce de support (10) fixée de manière rigide contre le côté inférieur du radiateur du véhicule.

4. Véhicule automobile selon la revendication 3,
**caractérisé en ce que**
le jupe (14) est reliée à la pièce de support (10) par l'intermédiaire d'une charnière en forme de film (12).

5. Véhicule automobile selon la revendication 4,
**caractérisé en ce que**
la pièce de support (10) et la jupe (14) sont réalisées en une seule pièce.

6. Véhicule automobile selon l'une des revendications 1 à 5,
**caractérisé en ce que**
le basculement de la jupe (14) dans sa position active maximale, est limité par une butée (16).

7. Véhicule automobile selon la revendication 6,
**caractérisé en ce que**
une installation de ressort comporte un premier élément de ressort (18) contre la force duquel la jupe (14) peut basculer dans sa position d'action maximale et un second élément de ressort (20) contre la force duquel la jupe (14) bascule dans sa position à plat.

8. Véhicule automobile selon la revendication 7,
**caractérisé en ce que**
la jupe (14), les éléments de ressort (18, 20) et la butée (16), sont réalisés en une seule pièce.
